# EUROPÄISCHE PATENTSCHRIFT

(11) **EP 3 105 766 B1**
(45) Veröffentlichungstag und Bekanntmachung des Hinweises auf die Patenterteilung: **14.11.2018**
(21) Anmeldenummer: 14719659.6
(22) Anmeldetag: 08.04.2014
(51) Int. Cl.: H01F 27/40, H01F 38/02, H02M 1/32, H02M 7/00, H02M 7/217

(54) **VERFAHREN ZUM SCHÜTZEN EINER ELEKTRISCHEN BAUEINHEIT VOR EINEM ÜBERSTROMSCHADEN**
METHOD FOR PROTECTING AN ELECTRICAL MODULAR UNIT FROM OVERCURRENT DAMAGE
PROCÉDÉ DE PROTECTION D'UN ENSEMBLE ÉLECTRIQUE CONTRE LES DOMMAGES DUS À DES SURINTENSITÉS

(43) Veröffentlichungstag der Anmeldung: 21.12.2016
(73) Patentinhaber: Siemens Aktiengesellschaft, 80333 München (DE)
(72) Erfinder: SCHMITT, Daniel, 90459 Nürnberg (DE)
(86) Internationale Anmeldenummer: PCT/EP2014/057080
(87) Internationale Veröffentlichungsnummer: WO 2015/154796

(56) Entgegenhaltungen:
- WO-A1-98/27635
- DE-C1- 4 441 279
- US-A- 5 969 928
- US-A- 5 977 861

## Beschreibung

Die Erfindung betrifft ein Verfahren zum Schützen einer elektrischen Baueinheit vor einem Überstromschaden, indem ein induktives Bauelement elektrische in magnetische und thermische Energie wandelt, bei dem ein Bypass im regulären Betrieb der Baueinheit das induktive Bauelement überbrückt und Strom über den Bypass fließt.

Durch die verstärkte Einspeisung von erneuerbaren Energien in Stromnetze bekommt die Hochspannungs-Gleichstrom-Übertragung (HGÜ) eine immer größere Bedeutung. Insbesondere beim Offshore-Windparks wird eine strahlungsarme und kostengünstige Kabelverbindung bevorzugt, die durch die HGÜ-Technik realisierbar ist. Da in Offshore-Windparks kein stabiles Netz vorhanden ist, bietet insbesondere die selbstgeführte HGÜ den Vorteil, dass sie geregelte Blindleistung Offshore zur Verfügung stellt. Außerdem kann mit selbstgeführter HGÜ das dynamische Verhalten am Anschlussknoten verbessert werden.

Kernelemente der Anschlüsse vom Windparknetz an die HGÜ und von der HGÜ an große Festlandtrassen bilden selbstgeführte HGÜ-Umrichter mit Spannungszwischenkreis und Transistoren, insbesondere IGBT (Insulated Gate Bipolar Transistoren). Die Möglichkeit, Wirk- und Blindleistung unabhängig voneinander regeln zu können, erleichtert den Anschluss selbstgeführter Umrichter an Drehstromnetze mit kleiner Kurzschlussleistung. Auch der Betrieb von Inselnetzen ist möglich, da der Netzaufbau, der sogenannte black-start, vereinfacht ist. Selbstgeführte HGÜ-Umrichter sind mit großen Gleichstrom-Kondensatoren ausgestattet, die zur Stütze der umgerichteten Spannung dienen. Die Umspannung von Drehstrom in Gleichstrom oder andersrum erfolgt durch die Schaltung von in der Regel zwei in Reihe geschalteten IGBT, zwischen denen der Wechselstrom abzweigt.

Bei einem Schaltfehler eines selbstgeführten HGÜ-Umrichters kann es zu einer schlagartigen Entladung der im Gleichstrom-Kondensator enthaltenen Energie über die Schalter kommen. Die hierbei freigesetzte Energie führt zu einer Zerstörung der Schalter und damit des Umrichters.

Aus der Patentschrift US 5,969,928 A ist eine Überstrom-Schutzeinrichtung für einen elektrischen Stromkreis bekannt. Diese Überstrom-Schutzeinrichtung weist einen Shunt-Widerstand mit einem parallelgeschaltetem Kaltleiter auf. Bei normalem Betriebsstrom fließt der Strom durch den Kaltleiter. Bei Überstrom erwärmt sich der Kaltleiter so stark, dass der Strom durch den parallelgeschalteten Shunt-Widerstand fließt.

Es ist eine Aufgabe der vorliegenden Erfindung, ein Verfahren zum Schützen einer elektrischen Baueinheit vor einem Schaden durch einen Überstrom im kA-Bereich anzugeben, mit dem ein Schaden durch die Entladung eines Stromspeichers zumindest verringert werden kann.

Diese Aufgabe wird durch ein Verfahren der eingangs genannten Art gelöst, bei dem erfindungsgemäß der Bypass durch einen durch ihn fließenden Überstrom, der über einem im störungsfreien Betrieb der Baueinheit erreichbaren Stromwert liegt, geöffnet wird, sodass mehr Strom durch das induktive Bauelement gezwungen wird, als Reststrom durch den Bypass fließt.

Die Erfindung geht von der Überlegung aus, dass ein induktives Bauelement einen Stromstoß, der beispielsweise durch eine schlagartige Entladung eines Kondensators hervorgerufen wird, puffern kann, indem ein Teil der elektrischen Energie in magnetische und thermische Energie umgewandelt wird, sodass hierdurch der Spitzenstrom durch die elektrische Baueinheit verringert wird. Da eine Induktivität gewöhnlich als diskretes Element in einem Stromkreis eingebracht wird, wirkt diese somit auch im ganz normalen Schaltbetrieb, sodass Induktivitätswerte immer einen Kompromiss zwischen maximaler Schutzwirkung, also einer Strombegrenzung im Schadensfall, und noch zu vertretender Kreisinduktivität für den Kommutierungskreis der Halbleiter darstellen.

Muss das induktive Bauelement beziehungsweise eine RL-Kombination sehr massiv ausgelegt werden, beispielsweise für den Einsatz in leistungselektronischen Schaltungen mit hohen Energien, so wirkt sich dies sehr nachteilig auf den Kommutierungskreis aus, da dadurch die Leiterschleife markant vergrößert wird. Auch die mechanische Befestigung sehr großer und massiv ausgelegter RL-Kombinationen ist aufwändig.

Wird jedoch, wie durch die Erfindung vorgeschlagen, das induktive Bauelement im regulären Betrieb der elektrischen Baueinheit durch den Bypass überbrückt, so wirkt das induktive Bauelement nicht oder nur in einem geringem Umfang im Kommutierungskreis der Schalter, sodass auch bei massiver Auslegung des induktiven Bauelements die Kreisinduktivität nicht zu einem Problem wird. Durch das Öffnen des Bypasses im Schadensfall wird hingegen der Überstrom durch das induktive Bauelement gezwungen und dort teilweise in magnetische Energie gewandelt. Das induktive Bauelement kommt daher nur im Überstromfall zum Einsatz.

Insbesondere bei der Entladung des Kondensators können Spitzenströme innerhalb von wenigen Millisekunden auftreten, sodass ein sehr schnelles Öffnen des Bypasses vonnöten ist, wenn die elektrische Baueinheit effektiv geschützt werden soll. Um dies zu erreichen, wird der Bypass durch den Überstrom selbst geöffnet, das Fließen des Überstroms durch den Bypass bewirkt also das Öffnen des Bypasses und somit die Wirksamkeit des induktiven Bauelements. Auf einem Stromsensor und einem damit verbundenen Schalter zum Öffnen des Bypasses kann somit verzichtet werden.

Zum Verringern der Stromspitze ist es nicht notwendig, dass der gesamte Überstrom durch das induktive Bauelement fließt und zum Aufbau des schützenden Magnetfelds beiträgt. Es ist ausreichend, wenn zumindest der größte Teil des Überstroms durch das induktive Bauelement fließt und ein Reststrom durch den Bypass fließt. Ein vollständiges Öffnen des Bypasses entsprechend einem mechanischen Schalter ist somit nicht notwendig und die durch das induktive Bauelement gezwungene Strommenge kann durch das Leitungsverhalten des Bypasses im Überstromfall eingestellt werden.

Das induktive Bauelement kann ein passives elektrisches Bauelement mit festem Induktivitätswert sein. Dies kann durch eine einfache Leiterschleife, beispielsweise in Form eines Mäanders oder einer oder mehrerer Kreiswindungen, wie bei einer Spule, realisiert werden. Im regulären, also störungsfreien Betrieb kann auch Strom durch das induktive Bauelement fließen, jedoch weniger als im Überstromfall. Auf diese Weise können Bypass und Induktivität parallel geschaltet sein, wobei die Einstellung der Strommengen, die durch den Bypass und das induktive Bauelement fließen, durch das Leitungsverhalten des Bypasses eingestellt werden kann.

Als Überstrom wird ein Stromwert verstanden, der über einem im störungsfreien Betrieb der Baueinheit erreichbaren Stromwert von beispielsweise 5 kA liegt. Zweckmäßigerweise beträgt der Überstrom zumindest das Zweifache des im störungsfreien Betrieb erreichbaren Maximalwerts. Der Überstrom beträgt zweckmäßigerweise mindestens 10 kA, insbesondere zumindest 100 kA.

Der Bypass kann einen ohmschen Widerstand bilden, sodass Bypass und Induktivität eine RL-Schaltung mit parallel geschalteten RL-Gliedern bilden. Der Überstrom öffnet den Bypass zweckmäßigerweise unmittelbar, beispielsweise durch ein Erhitzen oder einen anderen physikalischen Vorgang. Der Schutz der elektrischen Baueinheit vor einem Überstromschaden muss nicht absolut sein. Es ist ausreichend, wenn der Schaden verringert wird. Die elektrische Baueinheit kann ein Schalter, insbesondere IGBT, sein.

In einer vorteilhaften Ausführungsform der Erfindung ist ein elektrischer Leiter des Bypass so ausgeführt, dass der durch den Bypass fließende Überstrom die Temperatur des Leiters auf zumindest 150°C, insbesondere zumindest 300°C erhitzt, zweckmäßigerweise innerhalb von maximal 10 ms, insbesondere maximal 2 ms. Der Überstrom ist hierbei zweckmäßigerweise das Zehnfache des im störungsfreien Betrieb erreichbaren Maximalwerts. Im störungsfreien Betrieb erreicht die Temperatur des Leiters bei dieser Geometrie maximal 100°C.

Eine Möglichkeit eines Öffnens des Bypasses besteht darin, dass der Bypass durch den Überstrom erhitzt wird und hierdurch der ohmsche Widerstand des Bypasses vergrößert wird. Mit größer werdendem ohmschen Widerstand wird mehr Strom durch das induktive Bauelement gezwungen. Die Überhitzung sollte jedoch nicht bis zu einem Verdampfen des Bypass gehen, da hierdurch das Problem der Ionisierung und damit eines Überschlags entsteht. Es ist daher zweckmäßig, wenn der Bypass auch im erhitzten Zustand ein Festkörper bleibt. Ein relativ hoher ohmscher Widerstand kann aufrecht erhalten bleiben, und ein Überschlag kann vermieden werden.

Eine weitere Möglichkeit zum Öffnen des Bypasses besteht durch das Öffnen einer Hochspannungssicherung. Diese öffnet pyrotechnisch den Stromkreis beziehungsweise entfernt die Leiterbrücke und füllt den entstehenden Raum unverzüglich mit Sand. Diese Lösung hat den Vorteil der hohen Zuverlässigkeit der Schaltung, sie ist jedoch recht aufwändig.

Die Erfindung ist außerdem gerichtet auf eine elektrische Baueinheit mit einem Überstrompuffer, der ein induktives Bauelement zur Umwandlung von elektrischer in magnetische Energie und einen zum induktiven Bauelement parallel geschalteten Bypass umfasst.

Um die elektrische Baueinheit vor einem Überstromschaden zu schützen, wird vorgeschlagen, dass der Bypass erfindungsgemäß als stromgeschalteter Überstromschalter ausgeführt ist, der durch einen durch ihn fließenden Überstrom, der über einem im störungsfreien Betrieb erreichbaren Stromwert liegt, öffnet, sodass mehr Strom durch das induktive Bauelement gezwungen wird, als Reststrom durch den Bypass fließt.

Das zu schützende elektrische Bauelement ist zweckmäßigerweise in Reihe zum Überstrompuffer geschaltet beziehungsweise in einem Kurzschlussstromkreis zusammen mit dem Überstrompuffer angeordnet. Die elektrische Baueinheit umfasst zweckmäßigerweise einen Schalter, wie ein IGBT, der mit dem Überstrompuffer in Reihe geschaltet ist. Das induktive Bauelement umfasst zweckmäßigerweise eine Leiterschleife, die durch den Bypass kurzgeschlossen ist. Die Leiterschleife kann eine oder mehrere Mäanderwindungen oder eine oder mehrere Kreiswindungen in Form einer Wicklung aufweisen.

Vorteilhafterweise umfasst der Bypass einen Stromleiter aus einem Kaltleiter, dessen Temperaturkoeffizient α größer ist als der des Leiters des induktiven Bauelements, beispielsweise von Kupfer, insbesondere zumindest doppelt so groß, weiter insbesondere zumindest 5 x so groß, besser noch zumindest 10 x so groß. Die Relation kann sich auf eine Größe der Temperaturkoeffizienten bei 20°C beziehen. Da der Leiter im Betrieb jedoch regulär wärmer ist, als Raumtemperatur, ist es besonders vorteilhaft, wenn sich die Werte auf eine Temperatur von 50°C beziehen. Weiter ist es vorteilhaft, wenn der Temperaturkoeffizient α mit der Temperatur oberhalb 20°C ansteigt. Durch die Kaltleiteigenschaft steigt der ohmsche Widerstand des Bypasses beziehungsweise Stromleiters mit der Temperatur an, sodass mit steigender Temperatur ein wachsender Anteil des Überstroms durch das induktive Bauelement fließen muss.

Ein besonders vorteilhaftes Material für den Stromleiter ist Edelstahl. Hinsichtlich des elektrischen Leitungsverhaltens bei steigender Temperatur ist der Edelstahl V2A besonders vorteilhaft.

In einer weiteren vorteilhaften Ausgestaltung der Erfindung weist das induktive Bauelement einen ersten Leiter mit einer Leiterschleife mit einem Schleifenanfang und einem Schleifenende auf, wobei der Schleifenanfang indirekt über den Bypass und das Schleifenende direkt mit einem zweiten Leiter verbunden ist. Durch die Leiterschleife kann die Induktivität hergestellt werden. Durch den Bypass wird der Schleifenanfang bei dem zweiten Leiter verbunden, wodurch das induktive Bauelement oder zumindest ein Teil von ihr überbrückt wird. Das Schleifenende ist mit dem zweiten Leiter verbunden, sodass der das Schleifenende durchfließende Strom die Induktion erzeugt. Als Leiter wird im Folgenden ein elektrischer Leiter mit einer elektrischen Leitfähigkeit zumindest wie Aluminium verstanden, insbesondere ein Kupferleiter. Die Geometrie des Leiters ist zweckmäßigerweise dergestalt, dass sein Widerstand durch einen maximalen im regulären Betrieb erreichbaren Strom gegenüber einem stromlosen Zustand nur minimal erhöht wird, beispielsweise um höchstens den Faktor 2, insbesondere höchstens 1,2.

Die Induktivität des induktiven Bauelements kann vergrößert werden, wenn auch der zweite Leiter eine Leiterschleife mit einem Schleifenanfang und einem Schleifenende aufweist. Hierbei sind die Schleifenanfänge beider Leiter zweckmäßigerweise über den Bypass miteinander verbunden zum Überbrücken des induktiven Bauelements. Die beiden Schleifenenden beider Leiter sind zweckmäßigerweise direkt miteinander verbunden, sodass beide Schleifen das induktive Bauelement bilden.

Insbesondere bei einer Hochstromanwendung ist es vorteilhaft, wenn der beziehungsweise die elektrischen Leiter des induktiven Bauelements als Stromschienen ausgeführt sind. Eine Stromschiene, insbesondere in der Form eines Flachbands, beispielsweise aus Kupfer, weist einen großen Leitungsquerschnitt von insbesondere zumindest 100 mm² auf, insbesondere zumindest 500 mm². Ist das induktive Bauelement in das Flachband eingeformt, beispielsweise durch Einschnitte in das Flachband, so kann auf ein separates induktives Bauteil verzichtet werden. Zudem kann das induktive Bauelement sehr stabil mechanisch verankert werden.

Vorzugsweise ist eine Leiterschleife so in die Stromschiene eingeformt, dass sie in der Ebene der Stromschiene liegt. Dies ist zweckmäßigerweise bei beiden Leitern beziehungsweise beiden Stromschienen so.

Eine stabile Konstruktion verbunden mit einer einfachen Herstellung kann erreicht werden, wenn das induktive Bauelement eine als Schnecke ausgebildete Leiterschleife ist oder mehrere Leiterschleifen in Form von Schnecken, vorzugsweise eine Schnecke in jeder Stromschiene, enthält.

Bei hohen Strömen ist der Überstrompuffer beziehungsweise das induktive Bauelement hohen mechanischen Kräften ausgeliefert. Eine hohe mechanische Festigkeit des Überstrompuffers kann dadurch erzielt werden, dass der Überstrompuffer zwei als Flachleiter geformte Stromschienen aufweist, die flächig übereinander liegen. Durch einen Spannverband können die beiden Stromschienen fest miteinander verbunden werden.

Unabhängig von der Form des induktiven Bauelements ist es vorteilhaft, wenn der Bypass und das induktive Bauelement - ggf. mehrere Elemente des Bauelements, wie Stromschienen - durch einen Spannverband aufeinander gepresst sind. Einem ungewollten Lösen dieser Elemente voneinander durch das im Störfall auftretende Magnetfeld kann entgegengewirkt werden. Der Druck der Elemente gegeneinander beträgt zweckmäßigerweise zumindest 10 N/cm², insbesondere zumindest 50 N/cm².

Das induktive Element kann aus Bereichen der Stromschienen gebildet sein. Die elektrische Verbindung zwischen den beiden Stromschienen geschieht zweckmäßigerweise sowohl über den Bypass als auch über ein Leiterelement, das ein separates Element oder ein Teil einer der beiden Stromschienen sein kann. Das Leiterelement ist zweckmäßigerweise Teil des induktiven Bauelements.

Ebenfalls einer guten mechanischen Festigkeit förderlich ist es, wenn das induktive Bauelement zwei Stromschienen beziehungsweise Teile davon aufweist, mit jeweils einer als Schnecke ausgeführten Leiterschleife, wobei die beiden Schnecken übereinanderliegen. Die beiden Schnecken können durch eine Verpressung in einem Spannverband fest mechanisch miteinander verbunden werden. Zweckmäßigerweise sind die beiden Schnecken im Schneckeninneren direkt miteinander und jeweils am Schneckenanfang über den Bypass miteinander verbunden. Hierdurch kann auf einfache Weise eine mechanisch stabile Induktivität geschaffen werden.

Hinsichtlich der Ausgestaltung des Bypasses ist es förderlich, wenn dieser als Platte zwischen den beiden Stromschienen liegt. Hierbei ist es zweckmäßig, wenn die Platte maximal halb so dick wie die Stromschienen ist, insbesondere maximal ein Viertel so dick, damit sich das Material der Platte in einem Überstromfall schnell erhitzt.

Ebenfalls ist es möglich, dass der Bypass als ein oder mehrere Streifen zwischen den beiden Stromschienen liegt. Der Vorteil des Streifens gegenüber der Platte liegt darin, dass der Leitungsquerschnitt, durch den der Überstrom fließen muss, bei einem Streifen erheblich kleiner als bei der Platte ist, sodass sich der Bypass schneller erhitzt.

Um ein ungewolltes Bewegen des Bypasses relativ zu den beiden Leitern beziehungsweise Stromschienen im Überstromfall entgegenzuwirken, wird vorgeschlagen, dass der Bypass in einem Isolator eingebettet ist.

Um den Bypass auch bei sehr starken magnetischen Kräften im Überstromfall an seinem Platz in einfacher Weise halten zu können, ist es vorteilhaft, wenn der Bypass als U-Blech ausgeführt ist, bei dem jeder der beiden U-Schenkel flächig an einer Stromschiene anliegt. Der Bypass kann durch eine Verpressung in eine Spannverband durch die flächige Anlage der U-Schenkel an den Stromschienen sehr fest gehalten sein. Außerdem wird der Überstrom durch den U-Bogen mit einem im Verhältnis zu einer Leiterplatte geringen Leitungsquerschnitt gezwungen, sodass eine schnelle Erhitzung des U-Bogens erreicht werden kann.

Mit gleichem Vorteil ist zwischen den beiden Stromschienen ein Isolator angeordnet, wobei der Bypass den Isolator umgreift. Der Isolator kann mit dem Bypass mechanisch fest verpresst werden.

Wie bereits erwähnt ist es vorteilhaft, wenn der Überstrompuffer zwei Stromschienen aufweist, die über den Bypass elektrisch miteinander verbunden und in einem Spannverbund über eine Flächenpressung mechanisch aneinander gepresst sind.

Besonders vorteilhaft ist die Erfindung anwendbar in einem Umrichtermodul, das eine erfindungsgemäße elektrische Baueinheit enthält. Das Umrichtermodul umfasst zweckmäßigerweise zwei Gleichstromzuleitungen zum Anschließen des Umrichtermoduls an eine Gleichstrom-Energieübertragungsleitung. Zwischen den Gleichstromzuleitungen ist zweckmäßigerweise ein Kondensator als Stromspeicher angeordnet. Durch eine In-Reihe-Schaltung der elektrischen Baueinheit mit dem Kondensator kann Strom aus dem Kondensator gepuffert werden und die elektrische Baueinheit kann geschützt werden.

Das Umrichtermodul kann Teil einer Umrichteranordnung mit einer Anzahl von Umrichtermodulen sein, wobei die Umrichtermodule in 2 x 3 Reihen geschaltet sind und die äußeren Anschlüsse von drei Reihenschaltungen jeweils eine Gleichspannungsseite der Umrichteranordnung bilden.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination sowohl mit dem erfindungsgemäßen Verfahren als auch mit der erfindungsgemäßen elektrischen Baueinheit gemäß den unabhängigen Ansprüchen kombinierbar. So sind Verfahrensmerkmale auch als Eigenschaft der entsprechenden Vorrichtungseinheit gegenständlich formuliert zu sehen und umgekehrt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht im Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: einen selbstgeführten HGÜ-Umrichter mit einer Vielzahl von HVDC-Powermodulen in Reihenschaltung,
- FIG 2: ein HVDC-Powermodul mit zwei Schaltern, einem Kondensator, zwei Überstrompuffern und einem Bypass,
- FIG 3: einer der Überstrompuffer aus FIG 2 mit zwei Stromschienen und einem Bypass in einer schematischen Darstellung,
- FIG 4: die beiden Enden der beiden Stromschienen mit einem eingebrachten induktiven Bauelement und einem Bypassblech,
- FIG 5: die drei Elemente aus FIG 4 in zusammengesetzter Form,
- FIG 6: zwei Ersatzschaltungen für den Überstrompuffer,
- FIG 7: einen Bypass in einer alternativen Form als Streifen in einem Isolator,
- FIG 8: ein weiterer Bypass in Form eines U-Blechs,
- FIG 9: den Bypass aus FIG 8 zwischen zwei Stromschienen in einer Seitenansicht und
- FIG 10: eine S-förmige Anordnung von Stromschienen zu einem Überstrompuffer.

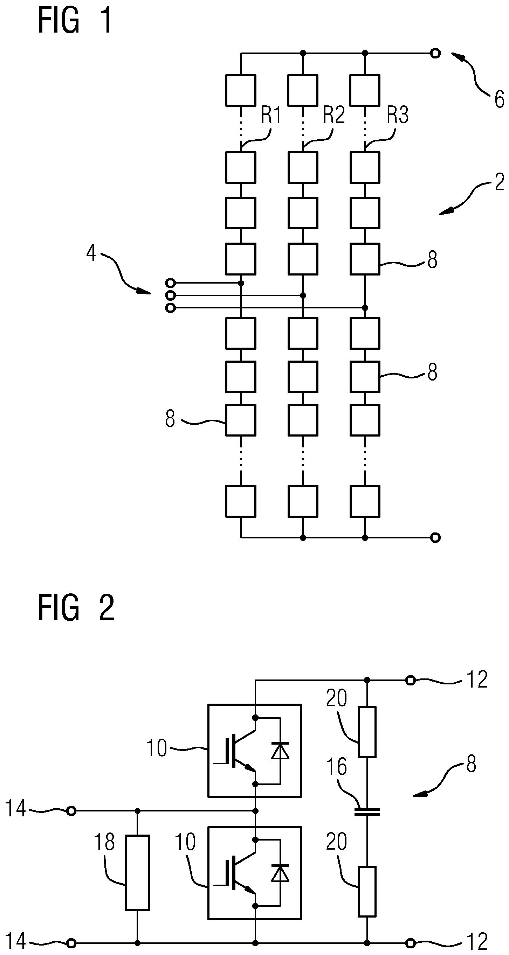

FIG 1 zeigt eine Umrichteranordnung 2 in Form eines selbstgeführten HGÜ-Umrichters zum Umrichten von Drehstrom an einem Drehstromeingang 4 in Gleichstrom an einen Gleichstromausgang 6 oder umgekehrt. Der Umrichter 2 weist eine Vielzahl von als Umrichtermodule ausgeführte elektrische Baueinheiten 8 auf, die in Reihe geschaltet sind, sodass jede der drei Drehstromphasen des Drehstromeingangs 4 über jeweils eine Kette mit den beiden Gleichstromphasen des Gleichstromausgangs 6 verbunden ist. Durch die Anordnung der Umrichtermodule in zwei mal drei parallel geschaltete Reihenschaltungen R1, R2, R3, bei denen die äußeren Anschlüsse die Gleichspannungsseite der Umrichteranordnung 2 bilden, kann Hochspannung mit hohen Stromstärken gerichtet werden.

Jeweils zwischen zwei einander spannungsmäßig entgegengesetzt geschalteten Reihenschaltungen R1, R2, R3 befindet sich ein Zwischenanschluss, der einen der drei Wechselspannungsanschlüsse des Drehstromeingangs 4 bildet, und also potentialmäßig zwischen den in FIG 1 oberen Umrichtermodulen 8 und den unteren Umrichtermodulen der beiden Reihenschaltungen R1, R2, R3 liegt.

Die elektrischen Baueinheiten 8 der Umrichteranordnung 2 sind identisch ausgeführt und in FIG 2 detaillierter dargestellt. Jedes Umrichtermodul 8 umfasst zwei Schalter 10, die jeweils als IGBT ausgeführt sind und zur Schaltung von Strömen im kA-Bereich und Spannungen im kV-Bereich ausgelegt sind. Alternativ kann auch nur ein Schalter 10 oder mehr Schalter 10 vorhanden sein. Die beiden Schalter 10 liegen potentialmäßig in Reihe zwischen den beiden Polen des Gleichspannungsausgangs 12, wobei ein Pol des Wechselstromeingangs 14 mit einem Pol des Gleichspannungsausgangs 12 angekoppelt ist und der andere Wechselstromeingang 14 potentialmäßig zwischen den beiden Schaltern 10 liegt.

Zwischen die beiden Pole des Gleichspannungsausgangs 12 - wobei Eingang und Ausgang entsprechend der Stromrichtung der Umrichtung zu verstehen sind - ist ein Kondensator 16 und zwei Überstrompuffer 20 geschaltet. Zwischen die beiden Pole des Wechselspannungsausgangs 14 ist ein Bypass 18 geschaltet. Der Bypass 18 enthält eine pyrotechnische Ladung zum Einschießen eines Stempels zum Kurzschließen der beiden Pole des Wechselspannungsausgangs 14 im Fehlerfall des Umrichtermoduls 8. Angesteuert wird der Bypass 18 von einem nicht dargestellten Überwacher, der einen Fehlerfall erkennt, wie beispielsweise das Freischalten beider Schalter 10 gleichzeitig, sodass sich der Kondensator 16 über die beiden Schalter 10 in einem internen Kurzschluss entlädt. Der Überwacher steuert dann den Bypass 18 an, sodass das Umrichtermodul 8 überbrückt und aus der Reihenschaltungen R1, R2, R3 herausgenommen wird. Eine Steuerelektronik erkennt den Fehler bzw. den Ausfall des Umrichtermoduls 8 und steuert die übrigen Umrichtermodule 8 der Reihenschaltungen R1, R2, R3 entsprechend an, dass die Stromumrichtung im ordentlichen Betrieb weitergeführt wird. Alternativ ist es denkbar, den Bypass 18 zwischen die beiden Pole des Gleichspannungsausgangs 12 zu schalten, so dass sich der Kondensator 16 bevorzugt über den Bypass 18 entlädt.

Die Schaltung in FIG 2 ist nur beispielhaft für eine Vielzahl von Möglichkeiten, bei denen eine Arbeitsspannung über ein elektrisches Bauelement, wie beispielhaft über den Kondensator 16 aus FIG 2, zusammenbrechen kann und durch einen Überstrompuffer ein schützender Effekt erreicht werden kann. Insofern ist die Erfindung nicht auf eine Anordnung wie in FIG 2 beschränkt.

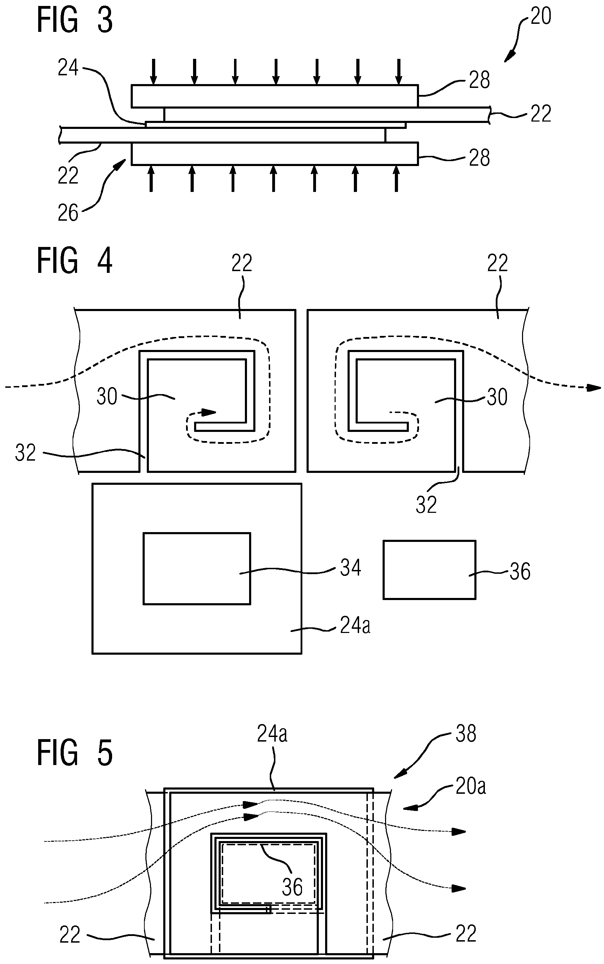

FIG 3 zeigt einen der beiden Überstrompuffer 20 in einer schematischen Seitenansicht. Dargestellt sind zwei elektrische Leiter, die als flachbandförmige Stromschienen 22 mit einer Breite von mehreren Zentimetern ausgeführt sind. Zwischen den beiden Stromschienen 22 ist eine Separatorplatte platziert, die im kalten Zustand als Bypass 24 dient und die beiden Stromschienen 22 elektrisch miteinander verbindet. Um das Paket aus den beiden Stromschienen 22 und dem Bypass 24 herum ist ein Spannverband 26 gebildet, der in FIG 3 durch zwei elektrisch isolierende Platten 28 und die in Richtung einer Kraftwirkung zeigenden Pfeile angedeutet ist. Durch den Spannverband 26 werden die beiden Stromschienen 22 flächig auf den Bypass 24 gepresst und somit mechanisch sicher aneinander gehalten.

Die Darstellung in FIG 3 stellt schematisch den Aufbau eines Überstrompuffers 20 dar, bei dem zwei Stromschienen über einen zwischen ihnen angeordneten Bypass 24 elektrische verbunden werden. Konkret kann ein Überstrompuffer andere Geometrien und Anordnungen aufweisen. Konkrete Geometrien und Anordnungen sind in den nachfolgenden Figuren dargestellt.

Die Ausgestaltung der Enden der beiden Stromschienen 22 ist in FIG 4 dargestellt. In beiden Stromschienen 22 ist jeweils eine schneckenförmige Leiterschleife 30 eingebracht, die durch Einschnitte 32 in die entsprechende Stromschiene 22 hergestellt wurde. Bei Verfolgung des Leiters entlang der gestrichelt dargestellten Linie bildet jede Leiterschleife 30 eine Kreiswindung, durch die eine Induktion durch einen entsprechend fließenden Strom erzeugt wird.

Unterhalb der in FIG 4 auf der linken Seite gezeigten Leiterschleife 30 ist ein Separator bzw. Bypass 24a gezeigt. Er besteht in diesem Ausführungsbeispiel aus einem ebenen Edelstahlblech, das in der Mitte mit einer Öffnung 34 in Form eines Fensters im Blech versehen wurde. Das Material des Bypass 24a weist einen Temperaturbeiwert auch Temperaturkoeffizient α genannt, auf, der zumindest dreimal höher ist als bei Kupfer, beide Werte bezogen auf Raumtemperatur. Im Speziellen ist der Bypass 24a aus dem rostfreien Edelstahl V2A gefertigt.

Unterhalb der in FIG 4 auf der rechten Seite gezeigten Leiterschleife 30 ist ein Leiterelement 36 dargestellt, das, wie die beiden Stromschienen 22, aus Kupfer besteht, Die Dicke des Leiterelements 36 ist an die Dicke der Platte des Bypass 24a angepasst und beträgt in beiden Fällen 1 mm. Das Leiterelement 36 passt in die fensterartige Öffnung 34 des Bypass 24a hinein und füllt diese zumindest weitgehend aus.

Die vier in FIG 4 gezeigten Elemente sind in FIG 5 übereinander gelegt, wie in FIG 3 gezeigt, dargestellt. Auf die beiden Platten 28 des Spannverbands 26 wurde der Übersichtlichkeit halber verzichtet. Zuunterst liegt die von links kommende Stromschiene 22 mit ihrer Leiterschleife 30. Darüber liegt das Stahlblech mit dem in die Öffnung 34 eingefügten Leiterelement 36. Darauf wiederum liegt die nach links führende Stromschiene 22 mit ihrer Leiterschleife 30. Die beiden Leiterschleifen 30 bzw. die Stromschienen 22 in diesem Bereich bilden ein induktives Bauelement 38.

Durch den Bypass 24a werden die beiden Schleifenanfänge der beiden Leiterschleifen 30 elektrisch direkt miteinander verbunden. Ein Schleifenanfang ist hierbei die Stelle, an der sich der Leitungsquerschnitt der Stromschiene 22 verengt und in die Leiterschleife 30 übergeht. Das Schleifenende, also in dem Fall das innere Ende der Schnecke der Leiterschleife 30 ist über das Leiterelement 36 mit dem Schleifenende der anderen Stromschiene 22 elektrisch verbunden.

Im kalten Zustand, also bei Raumtemperatur oder einer Temperatur bis maximal 100°C, fließt der Strom von einer Stromschiene 22 zur anderen durch den Bypass 24a, wie in FIG 5 durch die gestrichelten Pfeile angedeutet ist. Die Stromrichtung ist hierbei irrelevant.

Hierbei besteht zwar im Prinzip die Möglichkeit, dass der Stromfluss entlang der in FIG 4 dargestellten Pfeile verläuft, also durch die Leiterschleife 30 der linken Stromschiene 22, nach oben durch das Leiterelement in das Innere der Schneckenschleife der rechten Stromschiene und von dort in einer Windung weiter nach rechts. Ein solcher Stromweg mit im Wesentlichen zwei Windungen stellt jedoch einen hohen induktiven Widerstand dar, sodass der Strom zum größten Teil wie in FIG 5 dargestellt durch den Bypass 24a verläuft. Von der linken Stromschiene 22 kommend wird er nach oben durch den Bypass 24a verlaufen, wie die eng gepunkteten Segmente der beiden Pfeile in FIG 5 andeuten. Anschließend wird der Stromfluss in der oberen rechten Stromschiene 22 weiter nach rechts verlaufen. Abgesehen von dem kleinen Anteil windungsförmig fließenden Stroms wird der überaus größte Teil des Stroms induktionsarm durch den Überstrompuffer 20 fließen.

Im regulären Betrieb der als Umrichtermodule ausgeführten elektrischen Baueinheit 8 wird Strom mit unterschiedlichen Stromstärken durch den Überstrompuffer 20 fließen, wobei der im regulären Betrieb maximal vorkommende Strom den in FIG 5 gezeigten Stromweg wählen wird. Der Querschnitt der Stromschienen 22 und die Materialwahl und die Geometrie des Bypass 24a sind so ausgelegt, dass der Bypass 24a dem Stromfluss nur einen geringen ohmschen Widerstand entgegenstellt. Das Material des Bypass 24a weist jedoch einen erheblich größeren spezifischen Widerstand als das Material der elektrischen Leiter bzw. Stromschienen 22 auf, sodass der Stromfluss durch den Überstrompuffer 20 doch mit einer gewissen Verlustleistung behaftet ist. Diese führt zu einer Erwärmung des Bypass 24a, wobei die entstehende Wärme jedoch im Gleichgewicht mit der von den beiden Stromschienen 22 abgeführten Wärme ist, sodass die sich auch im Maximalstrom einstellende Temperatur so gering ist, dass die Verlustleistung den Stromweg wie in FIG 5 dargestellt erlaubt.

Steigt jedoch der Strom über den im regulären Betrieb maximal möglichen Strom, wird also der Strom zu einem Überstrom, so steigt die Temperatur des Bypass 24a weiter an. Entsprechend des Temperaturkoeffizienten α des Materials des Bypass 24a erhöht sich die Verlustleistung nun nicht nur quadratisch mit dem Strom sondern entsprechend noch stärker durch den ebenfalls ansteigenden elektrischen Widerstand. Der Temperaturkoeffizient α beträgt mehr als das Zehnfache des Temperaturkoeffizienten von Kupfer.

Der elektrische Widerstand und der Temperaturkoeffizient α des Materials des Bypass 24a sowie auch die Geometrie, insbesondere der Leitungsquerschnitt derjenigen Partien, durch die der größte Teil des Stroms durch den Überstrompuffer 20 bzw. den Bypass 24a fließt, ist nun so eingestellt, dass die Temperatur des Bypass 24a bei maximal möglichem Strom im regulären Betrieb so niedrig bleibt, dass der Stromweg durch den Bypass 24a erhalten bleibt, beispielsweise wie in FIG 5 gezeigt ist.

Andererseits soll bei einer Überstromsituation ab einer definierten Stromstärke von beispielsweise dem 50-fachen des regulär maximalen Stroms, insbesondere bei bereits dem 10-fachen, die Temperatur des Bypass 24a so stark steigen, dass die elektrische Leitfähigkeit so stark absinkt, dass zumindest der überwiegende Stromfluss nicht mehr durch den Bypass 24a hindurch erfolgt. Der größte Teil des Überstroms wird nun durch das induktive Bauelement 38 des Überstrompuffers 20 geführt, wie dies durch die gestrichelten Pfeile in FIG 4 dargestellt ist. Der Weg zwischen den beiden Stromschienen 22 wird hierbei durch das Leiterelement 36 zurückgelegt. Der Bypass 24a ist nun geöffnet, wobei ein geringer Teil des Überstroms noch durch den Bypass 24a fließen kann, da dieser noch eine gewisse Leitfähigkeit behält. Durch dieses Verhalten ist der Bypass 24a ein stromgeschalteter Überstromschalter, also ein Schalter, der aufgrund des durch ihn fließenden Stroms schaltet.

Die Geometrie des Bypass 24a ist so gestaltet, dass bei einem durch den Überstrompuffer 20a fließenden Überstrom mit einer Stromstärke, die das 50-fache des regulär maximalen Stroms beträgt, insbesondere bei bereits dem 10-fachen, die Temperatur des Bypass 24a innerhalb von 1 ms auf zumindest 300°C an. Zudem steigt der elektrische Widerstand des Bypass 24a in der gleichen Zeit auf zumindest auf zumindest das 10-fache seines maximalen regulären Werts. Der Bypass 24a wird hierdurch zu einem stromgeschalteten Überstromschalter, der bei einer solchen Überstromsituation öffnet.

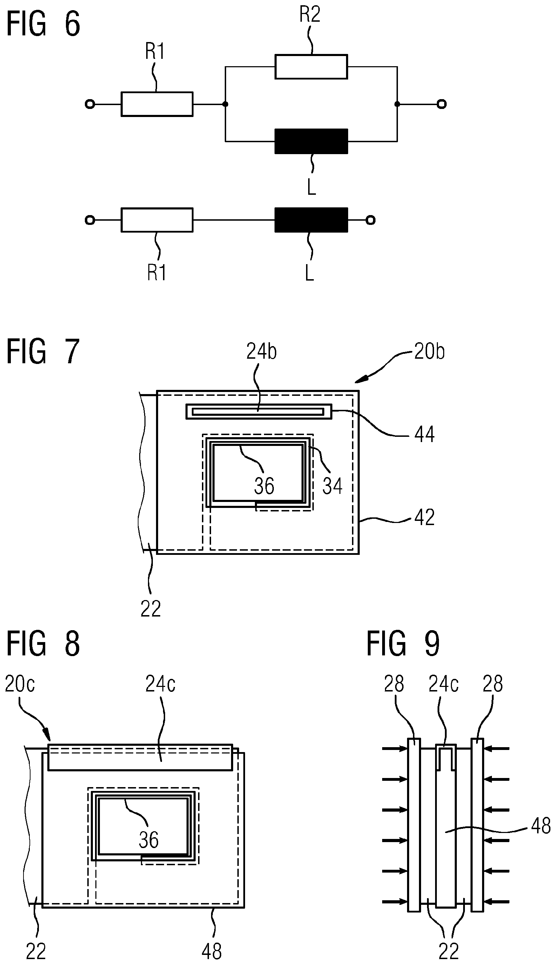

Ein Ersatzschaltbild des Überstrompuffers 20 ist in FIG 6 im oberen Bereich für den Normalbetrieb und im unteren Bereich für den Fehlerfall, also den Überstrombetrieb dargestellt. Der Widerstand R₁ stellt den ohmschen Widerstand der beiden Stromschienen 22 dar und der Widerstand R₂ den ohmschen Widerstand des Bypass 24a. Das induktive Bauelement L ist diejenige des induktiven Bauelements 38, also der beiden Leiterschleifen 30 der beiden Stromschienen 22 mit dem Leiterelement 36. Im fehlerfreien Betrieb fließt der Strom wie in FIG 5 angedeutet ist und der Widerstand R₂ des Bypass 24a stellt einen zusätzlichen ohmschen Widerstand zu dem der beiden Stromschienen 22 dar, ist jedoch bei kaltem Bypass 24a gering. Auch der Widerstand R₁ der beiden Stromschienen 22 ist gering. Ebenfalls gering ist die Induktivität L des induktiven Bauelements 38, da der Strom zumindest weitaus überwiegend schleifenfrei durch den Bypass 24a und nicht durch das parallel angeordnete induktive Bauelement 38 fließt.

Im Fehlerfall steigt der Widerstand R₂ des Bypass 24a sehr stark an, sodass der Stromfluss durch den Bypass 24a so gut wie keine Rolle mehr spielt. Der Weg durch den Widerstand R₂ ist somit versperrt und fällt weg. Der Widerstand R₁ der beiden Stromschienen 22 ist etwas größer, da der Stromweg verlängert und der Leitungsquerschnitt in den Leiterschliefen 30 geringer ist als durch den übrigen Bereich der Stromschienen 22. Erheblich gewachsen ist jedoch die Induktivität L durch den schleifenförmigen Verlauf des Stromflusses, wie in FIG 4 angedeutet ist. Das induktive Bauelement 38 entfaltet seinen induktiven Widerstand, durch den ein Teil der elektrischen Energie in magnetische Energie um das induktive Bauelement 38 bzw. durch dieses hindurch umgewandelt wird. Die Stromstärke einer Stromspitze wird hierdurch gesenkt und der Schaden an den Schaltern 10 bzw. der gesamten elektrischen Baueinheit 8 wird verringert. Die magnetische Energie wird erst bei absinkendem Strom, also hinter der Stromspitze, wieder in elektrische Energie umgewandelt und verbreitert somit den Strompuls. Da die zeitliche Dauer des Strompulses jedoch erheblich unkritischer als die maximale Stromstärke des Überstroms ist, ist diese Rückführung der magnetischen Energie in elektrische Energie geringer, da schon ein erheblicher Teil der zuvor gespeicherten Energie im Kondensator in thermische Verluste (ohmsche Verluste) umgewandelt wurde. Die verbleibende magnetische Energie wird wieder in elektrische Energie zurückgewandelt, um dann erneut wieder in magnetische Energie gewandelt zu werden. Diese gedämpfte periodische Schwingung hält solange vor, bis im Wesentlichen die gesamte Energie in thermische Verluste umgesetzt wurde.

FIG 7 zeigt einen Überstrompuffer 20b mit einer anderen Anordnung eines Bypass 24b, der in einem Isolator 42 eingebettet ist. Die nachfolgende Beschreibung beschränkt sich im Wesentlichen auf die Unterschiede zum vorangegangenen Ausführungsbeispiel, auf das bezüglich gleich bleibender Merkmale und Funktionen verwiesen wird. Im Wesentlichen gleich bleibende Bauteile sind grundsätzlich mit den gleichen Bezugszeichen beziffert und nicht erwähnte Merkmale sind in den jeweils folgenden Ausführungsbeispielen von den vorhergehenden übernommen, ohne dass sie erneut beschrieben sind.

In FIG 7 ist - analog zu FIG 5 - die linke und untere Stromschiene 22 und das im Zentrum ihrer schneckenförmigen Leiterschleife 30 liegenden Leiterelement 36 gezeigt. Anstelle der Edelstahlplatte aus FIG 4 und FIG 5 ist auf das Ende der Stromschiene 22 ein Isolator 42 in Form einer elektrisch isolierenden Platte aufgelegt, die wiederum die Öffnung 34 wie der Bypass 24a enthält. In dieser Öffnung 34 befindet sich das Leiterelement 36, das, analog zum Bypass 24a, annähernd gleich dick ist - unter Beachtung der vollständigen Verpressung des Spannverbands - wie der Isolator 42.

Der Bypass 24b ist auf einen metallischen Streifen reduziert, der in eine Ausnehmung 44 des Isolators 42 eingelegt ist. Die Dicke des Bypass 24b bzw. des metallischen Streifens ist identisch zur Dicke des Isolators 42. Oben auf diese Konstruktion aufgelegt wird nun die rechte Stromschiene 22 aus FIG 5, die jedoch in FIG 7 der Übersichtlichkeit halber nicht dargestellt ist.

Der Stromweg durch den Bypass 24b ist im Wesentlichen identisch zu demjenigen aus FIG 5, wobei jedoch der Leitungsquerschnitt des Bypass 24b erheblich gegenüber dem Bypass 24a verringert ist. Dies hat den Vorteil, dass sich das Material des Bypass 24b im Überstromfall erheblich schneller erhitzt, sodass der Bypass 24b schneller öffnet und der Überstrom schneller durch die beiden Leiterschleifen 30, also die Induktion 38, gezwungen wird. Entsprechend ist der Widerstand R₁ aus FIG 6 im Regelbetrieb etwas größer als beim Bypass 24a aus FIG 4 bzw. FIG 5. Eine vergrößerte elektrische Verlustleistung muss evtl. weggekühlt werden durch entsprechende Kühlelemente.

Ein weiterer Überstrompuffer 20c mit einem Bypass 24c anderer Geometrie ist in FIG 8 von oben und in FIG 9 von der Seite dargestellt. Der Bypass 24c ist als ein U-Blech aus Edelstahl ausgeführt, dessen U-Form um die Kante eines Isolators 48 beidseitig herumgeführt ist. Die beiden U-Schenkel des Bypass 24c sind jeweils zwischen dem Isolator 48 und einer Stromschiene 22 eingeklemmt. Außenseitig sind die beiden Platten 28 des Spannverbands 26 angeordnet, auf deren Darstellung in FIG 8 der Übersichtlichkeit halber verzichtet wurde.

Diese Geometrie bildet den Vorteil, dass der Bypass 24c mit den beiden U-Schenkeln fest in den Spannverband 26 eingeklemmt ist, sodass er auch bei starkem induktivem Magnetfeld nicht aus seiner Position gedrückt wird. Außerdem ist der Leitungsquerschnitt, der durch den U-Bogen des Bypass gebildet wird, verhältnismäßig gering, sodass auch mit dieser Geometrie ein schnell schaltender Bypass 46 bei einer Überstromsituation erreicht wird. Außerdem kann Verlustleistung von außen verhältnismäßig leicht weggekühlt werden.

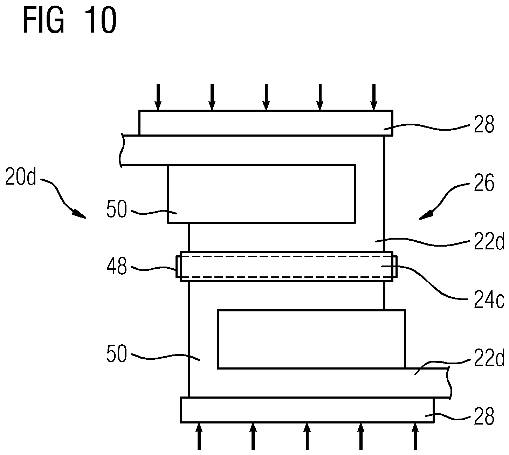

FIG 10 zeigt einen Überstrompuffer 20d analog zu FIG 3, wobei jedoch der Bypass 24c aus FIG 8 bzw. FIG 9 Anwendung findet. Die beiden Stromschienen 22d sind jedoch in einem U-Bogen um zwei Isolatoren 50 geführt, die - bei einer entsprechenden mechanischen Verankerung der Isolatoren 50 - ein nach links verschieben der oberen Stromschiene 22d oder ein nach rechts verschieben der unteren Stromschiene 22d verhindern. Hierdurch kann zusätzlich zum Spannverband 26 mit seinen beiden Platten 28 eine sehr stabile mechanische Befestigung des Überstrompuffers 20d erreicht werden.

### Bezugszeichenliste

- 2: Umrichteranordnung
- 4: Drehstromeingang
- 6: Gleichstromausgang
- 8: elektrische Baueinheit
- 10: Schalter
- 12: Gleichspannungsausgang
- 14: Wechselstromeingang
- 16: Kondensator
- 18: Bypass
- 20a-d: Überstrompuffer
- 22: Stromschiene
- 24a-c: Bypass
- 26: Spannverband
- 28: Platte
- 30: Leiterschleife
- 32: Einschnitt
- 34: Öffnung
- 36: Leiterelement
- 38: Induktivität
- 42: Isolator
- 44: Ausnehmung
- 48: Isolator
- 50: Isolator

## Patentansprüche

1. Verfahren zum Schützen einer elektrischen Baueinheit (8) vor einem Überstromschaden, indem ein induktives Bauelement (38) elektrische in magnetische und thermische Energie wandelt, bei dem ein Bypass (24, 24a-c) im regulären Betrieb der Baueinheit (8) das induktive Bauelement (38) überbrückt und Strom über den Bypass (24, 24a-c) fließt,
wobei der Bypass (24, 24a-c) durch einen durch ihn fließenden Überstrom, der über einem im störungsfreien Betrieb der Baueinheit (8) erreichbaren Stromwert liegt, geöffnet wird, so dass mehr Strom durch das induktive Bauelement (38) gezwungen wird, als Reststrom durch den Bypass (24, 24a-c) fließt.

2. Verfahren nach Anspruch 1,
wobei der Bypass (24, 24a-c) durch den Überstrom erhitzt wird und auch im erhitzten Zustand einen Teil des Überstroms auf gleichem Wege wie im regulären Betrieb leitet.

3. Elektrische Baueinheit (8) mit einem Überstrompuffer (20a-d), der ein induktives Bauelement (38) zur Umwandlung von elektrischer in magnetische Energie und einen zum induktiven Bauelement (38) parallel geschalteten Bypass (24, 24a-c) umfasst,
wobei der Bypass (24, 24a-c) als stromgeschalteter Überstromschalter ausgeführt ist, der durch einen durch ihn fließenden Überstrom, der über einem im störungsfreien Betrieb erreichbaren Stromwert liegt, öffnet, so dass mehr Strom durch das induktive Bauelement (38) gezwungen wird, als Reststrom durch den Bypass (24, 24a-c) fließt.

4. Elektrische Baueinheit (8) nach Anspruch 3,
wobei der Bypass (24, 24a-c) einen Stromleiter aus einem Kaltleiter aufweist, dessen Temperaturkoeffizient α zumindest doppelt so groß, insbesondere 10 x größer ist als der des Leiters des induktiven Bauelements (38).

5. Elektrische Baueinheit (8) nach Anspruch 3 oder 4,
wobei das induktive Bauelement (38) einen ersten Leiter mit einer Leiterschleife (30) mit einem Schleifenanfang und einem Schleifenende aufweist, und der Schleifenanfang indirekt über den Bypass (24, 24a-c) und das Schleifenende direkt mit einem zweiten Leiter verbunden ist.

6. Elektrische Baueinheit (8) nach Anspruch 5,
wobei der zweite Leiter eine Leiterschleife (30) mit einem Schleifenanfang und einem Schleifenende aufweist, und die Schleifenanfänge beider Leiter über den Bypass (24, 24a-c) und die Schleifenenden beider Leiter direkt miteinander verbunden sind.

7. Elektrische Baueinheit (8) nach einem der Ansprüche 3 bis 6,
wobei das induktive Bauelement (38) eine als Flachband ausgeführte Stromschiene (22, 22d) aufweist, in die das induktive Bauelement (38) durch Einschnitte (32) in das Flachband eingeformt ist.

8. Elektrische Baueinheit (8) nach einem der Ansprüche 3 bis 7,
wobei der Überstrompuffer (20a-d) zwei als Flachleiter geformte Stromschienen (22, 22d) aufweist, die flächig übereinander liegen, das induktive Bauelement (38) bilden und sowohl über den Bypass (24, 24a-c) als auch mit einem Leiter miteinander verbunden sind, der ein Teil des induktiven Bauelements (38) ist.

9. Elektrische Baueinheit (8) nach einem der Ansprüche 3 bis 8,
wobei das induktive Bauelement (38) zwei Stromschienen (22, 22d) mit jeweils einer als Schnecke ausgeführten Leiterschleife (30) aufweist, die beiden Schnecken übereinander liegen und im Schneckeninneren direkt und jeweils am Schneckenanfang über den Bypass (24, 24a-c) miteinander verbunden sind.

10. Elektrische Baueinheit (8) nach Anspruch 8 oder 9,
wobei der Bypass (24a) als Platte zwischen den beiden Stromschienen (22) liegt.

11. Elektrische Baueinheit (8) nach Anspruch 8 oder 9,
wobei der Bypass (24b) als Streifen zwischen den beiden Stromschienen (22) liegt.

12. Elektrische Baueinheit (8) nach einem der Ansprüche 8 bis 11,
wobei der Bypass (24c) als U-Blech ausgeführt ist und jeder der beiden U-Schenkel flächig an einer Stromschiene (22, 22d) anliegt.

13. Elektrische Baueinheit (8) nach einem der Ansprüche 8 bis 12,
wobei zwischen den beiden Stromschienen (22, 22d) ein Isolator (48) angeordnet ist und der Bypass (24c) den Isolator umgreift.

14. Elektrische Baueinheit (8) nach einem der Ansprüche 3 bis 13,
wobei der Überstrompuffer (20a-d) zwei Stromschienen (22, 22d) aufweist, die über den Bypass (24, 24a-c) elektrisch miteinander verbunden und in einem Spannverband (26) über eine Flächenpressung mechanisch aneinander gepresst sind.

15. Umrichtermodul mit einer elektrischen Baueinheit (8) nach einem der Ansprüche 3 bis 14, zwei Gleichstromzuleitungen und einem zwischen den Gleichstromzuleitungen angeordneten Kondensator (16), der mit der elektrischen Baueinheit (8) in Reihe geschaltet ist.

## Claims

1. Method for protecting an electric unit (8) against overcurrent damage by virtue of an inductive component (38) converting electric power into magnetic and thermal energy, in which a bypass (24, 24a-c) bypasses the inductive component (38) during regular operation of the unit (8), and current flows via the bypass (24, 24a-c),
wherein
the bypass (24, 24a-c) is opened by an overcurrent flowing through it that is above a current value reachable during correct operation of the unit (8), so that more current is forced through the inductive component (38) than residual current flows through the bypass (24, 24a-c).

2. Method according to Claim 1,
wherein
the bypass (24, 24a-c) is heated by the overcurrent and, even in the heated state, conducts some of the overcurrent in the same way as during regular operation.

3. Electric unit (8) having an overcurrent buffer (20a-d) that comprises an inductive component (38) for converting electric power into magnetic energy and a bypass (24, 24a-c) connected in parallel with the inductive component (38),
wherein
the bypass (24, 24a-c) is embodied as a current switched overcurrent switch that opens by virtue of an overcurrent flowing through it that is above a current value reachable during correct operation, so that more current is forced through the inductive component (38) than residual current flows through the bypass (24, 24a-c).

4. Electric unit (8) according to Claim 3,
wherein
the bypass (24, 24a-c) has an electrical conductor comprising a PTC thermistor whose temperature coefficient α is at least twice as great, particularly 10 x greater, than that of the conductor of the inductive component (38).

5. Electric unit (8) according to Claim 3 or 4,
wherein
the inductive component (38) has a first conductor having a conductor loop (30) having a loop start and a loop end, and the loop start is connected indirectly via the bypass (24, 24a-c), and the loop end is connected directly to a second conductor.

6. Electric unit (8) according to Claim 5,
wherein
the second conductor has a conductor loop (30) having a loop start and a loop end, and the loop starts of the two conductors are connected via the bypass (24, 24a-c), and the loop ends of the two conductors are connected directly to one another.

7. Electric unit (8) according to one of Claims 3 to 6,
wherein
the inductive component (38) has a busbar (22, 22d), embodied as a ribbon, in which the inductive component (38) is formed by virtue of incisions (32) in the ribbon.

8. Electric unit (8) according to one of Claims 3 to 7,
wherein
the overcurrent buffer (20a-d) has two busbars (22, 22d), shaped as flat conductors, that are situated flat above one another, form the inductive component (38) and are connected to one another both via the bypass (24, 24a-c) and by means of a conductor, which is part of the inductive component (38).

9. Electric unit (8) according to one of Claims 3 to 8,
wherein
the inductive component (38) has two busbars (22, 22d), each having a conductor loop (30) embodied as a worm, the two worms being situated above one another and being connected to one another inside the worm directly and, in each case at the start of the worm, via the bypass (24, 24a-c).

10. Electric unit (8) according to Claim 8 or 9,
wherein
the bypass (24a) is situated as a plate between the two busbars (22) .

11. Electric unit (8) according to Claim 8 or 9,
wherein
the bypass (24b) is situated as a strip between the two busbars (22) .

12. Electric unit (8) according to one of Claims 8 to 11,
wherein
the bypass (24c) is embodied as a U sheet and each of the two U limbs lies flat against a busbar (22, 22d).

13. Electric unit (8) according to one of Claims 8 to 12,
wherein
the two busbars (22, 22d) have an insulator (48) arranged between them, and the bypass (24c) engages around the insulator.

14. Electric unit (8) according to one of Claims 3 to 13,
wherein
the overcurrent buffer (20a-d) has two busbars (22, 22d) that are electrically connected to one another via the bypass (24, 24a-c) and are mechanically pressed against one another in a clamping brace (26) by means of surface pressure.

15. Converter module having an electric unit (8) according to one of Claims 3 to 14, two DC supply lines and a capacitor (16), arranged between the DC supply lines, that is connected in series with the electric unit (8).

## Revendications

1. Procédé de protection d'un ensemble (8) électrique vis-à-vis d'un dommage dû à des surintensités, dans lequel un composant (38) inductif transforme de l'énergie électrique en énergie magnétique et thermique, dans lequel une dérivation (24, 24a-c) shunte, en fonctionnement régulier de l'ensemble (8), le composant (38) inductif et du courant passe par la dérivation (24, 24a-c),
dans lequel
on ouvre la dérivation (24, 24a-c), dans lequel, par une surintensité qui y passe et qui est au dessus d'une valeur du courant pouvant être atteinte en fonctionnement sans perturbation de l'ensemble (8) électrique de manière à ce que plus de courant soit forcé de passer par le composant (38) inductif qu'il ne passe de courant restant par la dérivation (24, 24a-c).

2. Procédé suivant la revendication 1,
dans lequel
la dérivation (24, 24a-c) est chauffée par la surintensité et conduit, également dans l'état chauffé, une partie de la surintensité par les mêmes voies qu'en fonctionnement régulier.

3. Ensemble (8) électrique comprenant un tampon (20a-d) de surintensité, qui comprend un composant (38) inductif pour transformer de l'énergie électrique en énergie magnétique et une dérivation (24, 24a-c) montée en parallèle avec le composant (38) inductif,
dans lequel
la dérivation (24, 24a-c) est réalisée sous la forme d'un interrupteur de surintensité à commutation de courant, qui s'ouvre par une surintensité, qui passe et qui est au-dessus d'une valeur de courant pouvant être atteinte en fonctionnement sans perturbation de manière à ce que plus de courant soit forcé de passer par le composant (38) inductif qu'il ne passe de courant restant par la dérivation (24, 24a-c).

4. Ensemble (8) électrique suivant la revendication 3,
dans lequel
la dérivation (24, 24a-c) a un conducteur de courant en une thermistance dont le coefficient α de température est au moins deux fois plus grand, notamment 10 fois (x) plus grand que celui du conducteur du composant (38) inductif.

5. Ensemble (8) électrique suivant la revendication 3 ou 4, dans lequel
le composant (38) inductif a un premier conducteur ayant une première boucle (30) ayant un début de boucle et une fin de boucle et le début de boucle est relié indirectement par l'intermédiaire de la dérivation (24, 24a-c) et la fin de boucle directement à un deuxième conducteur.

6. Ensemble (8) électrique suivant la revendication 5,
dans lequel
le deuxième conducteur a une boucle (30) ayant un début de boucle et une fin de boucle et les débuts de boucle des deux conducteurs sont reliés par l'intermédiaire de la dérivation (24, 24a-c) et les fins de boucle des deux conducteurs sont reliées directement entre elles.

7. Ensemble (8) électrique suivant l'une des revendications 3 à 6,
dans lequel
le composant (38) inductif a une barre (22, 22d) de courant, qui est réalisée sous la forme d'une bande plate et dans laquelle le composant (38) inductif est incorporé dans la bande plate par des entailles (32).

8. Ensemble (8) électrique suivant l'une des revendications 3 à 7,
dans lequel
le tampon (20a-d) de surintensité a deux barres (22, 22d) de courant conformées en conducteurs plats, qui s'appliquent à plat l'une sur l'autre, qui forment le composant (38) inductif et qui sont reliées entre elles tant par la dérivation (24, 24a-c) qu'également par un conducteur, qui fait partie du composant (38) inductif.

9. Ensemble (8) électrique suivant l'une des revendications 3 à 8,
dans lequel
le composant (38) inductif a deux barres (22, 22d) de courant ayant chacune une boucle (30) réalisée sous la forme d'un escargot, les deux formes en escargots sont disposées l'une sur l'autre et sont reliées entre elles à l'intérieur, directement et chacune au début de la forme en escargot par la dérivation (24, 24a-c).

10. Ensemble (8) électrique suivant la revendication 8 ou 9, dans lequel
la dérivation (24a) se trouve sous la forme d'une plaque entre les deux barres (22) de courant.

11. Ensemble (8) électrique suivant la revendication 8 ou 9, dans lequel
la dérivation (24b) se trouve sous la forme d'une bande entre les deux barres (22) de courant.

12. Ensemble (8) électrique suivant l'une des revendications 8 à 11,
dans lequel
la dérivation (24c) est réalisée sous la forme d'une tôle en U et chacune des deux branches du U s'applique par une surface à une barre (22, 22d) de courant.

13. Ensemble (8) électrique suivant l'une des revendications 8 à 12,
dans lequel
entre les deux barres (22, 22d) de courant est disposé un isolateur (48) et la dérivation (24c) entoure l'isolateur.

14. Ensemble (8) électrique suivant l'une des revendications 3 à 13,
dans lequel
le tampon (20a-d) de surintensité a deux barres (22, 22d) de courant, qui sont reliées entre elles électriquement par l'intermédiaire de la dérivation (24, 24a-c) et sont pressées l'une contre l'autre mécaniquement par une application de pression sur une surface en un ensemble (26) serré.

15. Module de convertisseur ayant un ensemble (8) électrique suivant l'une des revendications 3 à 14, deux lignes d'entrée de courant continu et un condensateur (16), qui est monté entre les deux lignes d'entrée de courant continu et qui est monté en série avec l'ensemble (8) électrique.
